# EUROPÄISCHE PATENTANMELDUNG

(11) **EP 4 806 532 A1**
(43) Veröffentlichungstag der Anmeldung: **16.09.2026**
(21) Anmeldenummer: 26162334.2
(22) Anmeldetag: 04.03.2026
(51) Int. Cl.: B01D 19/00, B04C 5/04, B04C 11/00, C02F 1/20, F24D 19/08

(54) **HYDROZYKLON-ENTGASUNGSVORRICHTUNG**

(30) Priorität: 11.03.2025 DE 102025109258
(71) Anmelder: R + L Ug (Haftungsbeschränkt), 83083 Riedering (DE)
(72) Erfinder: STAUDACHER, Robert, 83101 Rohrdorf (DE); WIESBÖCK, Ludwig, 83101 Rohrdorf (DE); DAXLBERGER, Simon, 83083 Riedering (DE); ITTLINGER, Hans, 83093 Bad Endorf (DE)
(74) Vertreter: Lorenz Seidler Gossel Part. mbB

(57) **Zusammenfassung**

Die vorliegende Erfindung zeigt eine Hydrozyklon-Entgasungsvorrichtung zur Entgasung einer Flüssigkeit, mit einem Entgasungsbehälter, im welchem sich im Betrieb entlang einer Rotationsachse ein äußerer Flüssigkeitszyklon und ein innerer Gaszyklon bilden, wobei der Entgasungsbehälter mindestens einen Zulauf für die Flüssigkeit, mindestens einem Ablauf für die Flüssigkeit und mindestens eine Ablassöffnung für das Ablassen von Gas aufweist. Dabei ist vorgesehen, dass die Hydrozyklon-Entgasungsvorrichtung so ausgestaltet ist, dass zum Ablassen von Gas aus dem Entgasungsbehälter der Flüssigkeitsstrom aus Entgasungsbehälter gestoppt und/oder reduziert wird, so dass der Flüssigkeitspegel innerhalb des Entgasungsbehälters durch die durch den Zulauf nachströmende Flüssigkeit ansteigt.

## Beschreibung

Die vorliegende Erfindung betrifft eine Hydrozyklon-Entgasungsvorrichtung zur Entgasung einer Flüssigkeit.

Bei der Hydrozyklon-Entgasung handelt es sich um eine Vakuum-Entgasung, bei welcher die zu entgasende Flüssigkeit mit einem Unterdruck in Kontakt gebracht wird, um die in der Flüssigkeit enthaltenen Gase zu entfernen.

Wichtige Kriterien für die Effizienz einer Vakuum-Entgasung sind eine große Kontaktfläche zwischen der zu entgasenden Flüssigkeit und dem Vakuum, ein möglichst niedriges Druckniveau sowie eine möglichst lange Verweilzeit.

Im Bereich der Vakuum-Entgasung existieren bereits eine Reihe von unterschiedlichen Verfahren mit jeweils spezifischen Vor- und Nachteilen.

Zum einen kann die Entgasung über eine semipermeable Membran mit oder ohne Strippgas erfolgen. Diese Ermöglicht eine sehr hohe Entgasungsleistung und die Entfernung von gelösten Gasen bis in den Bereich der Spurengase. Die Vakuum-Entgasung über eine semipermeable Membran ist jedoch anfällig gegenüber Verschmutzungen und nur mit vorgereinigten Flüssigkeiten sinnvoll. Weiterhin bestehen hohe Anschaffungskosten.

Eine weitere Technik setzt Vakuum-Sprührohr-Entgaser ein, bei welchen die Flüssigkeit im Vakuum versprüht wird. Auch hier lässt sich eine hohe Entgasungsleistung erzielen. Das Verfahren ist jedoch ebenfalls anfällig gegenüber Verschmutzung, da die Entgasungsleistung von der Sprühdüse abhängt, was enge Querschnitte erfordert. Weiterhin ist die Qualität der Entgasung begrenzt.

Weiterhin kann die Entgasung nach dem Injektorprinzip durch eine Druckabsenkung durch hohe Strömungsgeschwindigkeiten erfolgen.

Bei der Hydrozyklon-Entgasung wird die Flüssigkeit in einen Entgasungsbehälter geleitet, in welchem sich aufgrund der eingesetzten Strömungsgeometrie ein äußerer Flüssigkeitszyklon und ein innerer Gaszyklon bilden. Die Hydrozyklon-Entgasung stellt geringe Anforderungen an die Wasserqualität und toleriert daher Verschmutzungen besser als die oben genannten Prozesse.

Bei aus dem Stand der Technik bekannten Hydrozyklon-Entgasungsvorrichtungen wird durch Anlegen eines Unterdrucks aus dem Gaszyklon Gas abgezogen werden. Weiterhin handelte es sich bei der Entgasung mit einer Hydrozyklon-Entgasungsvorrichtung um einen kontinuierlichen Prozess.

Druckschrift DE 36 41 781 A1 zeigt eine Hydrozyklon-Entgasungsvorrichtung, bei welcher sowohl das Zulauf- als auch das Ablaufrohr tangential an dem Mantel des Entgasungsbehälters angeordnet sind. Dabei wird die Flüssigkeit dem Hydrozyklon mit einem Mindestdruck von 6 bis 8 bar zugeführt.

Die Druckschrift GB 2 440 726 A zeigt eine Hydrozyklon-Entgasungsvorrichtung mit einer speziellen Geometrie des Entgasungsbehälters.

Die Druckschrift DE 10 2016 011 540 B3 zeigt ein Wirbelrohr zur Trennung eines Fluidstroms. Die Druckschrift DE 10 2017 113 888 B3 zeigt einen Fliehkraftabscheider zur Fluidtrennung.

Druckschriften DE 10 2021 107 660 A1, CH 319 593 A und DE 30 22 420 A1 zeigen jeweils Hydrozyklon-Entgasungsvorrichtungen mit einem tangentialen Einlass in und einem axialen Auslass aus dem Entgasungsbehälter. Teilweise war hierbei weiterhin eine Flüssigkeitspumpe vorgesehen, welche den Flüssigkeitsstrom aus dem Entgasungsbehälter erzeugt, und welche mit ihrer Saugseite mit dem Ablauf des Entgasungsbehälters in Verbindung steht.

Allerdings war bei Hydrozyklon-Entgasungsvorrichtungen gemäß dem Stand der Technik die Entgasungsqualität relativ gering.

Aufgabe der vorliegenden Erfindung ist es, eine Hydrozyklon-Entgasungsvorrichtung mit verbesserten Eigenschaften zur Verfügung zu stellen.

Diese Aufgabe wird durch Hydrozyklon-Entgasungsvorrichtungen gemäß Anspruch 1 gelöst. Bevorzugte Ausgestaltungen der vorliegenden Erfindung sind Gegenstand der Unteransprüche.

Die vorliegende Erfindung umfasst eine Hydrozyklon-Entgasungsvorrichtung zur Entgasung einer Flüssigkeit, mit einem Entgasungsbehälter, im welchem sich im Betrieb entlang einer Rotationsachse ein äußerer Flüssigkeitszyklon und ein innerer Gaszyklon bilden, wobei der Entgasungsbehälter mindestens einen Zulauf für die Flüssigkeit, mindestens einem Ablauf für die Flüssigkeit und mindestens eine Ablassöffnung für das Ablassen von Gas aufweist. Erfindungsgemäß ist die Hydrozyklon-Entgasungsvorrichtung so ausgestaltet, dass zum Ablassen von Gas aus dem Entgasungsbehälter der Flüssigkeitsstrom aus Entgasungsbehälter gestoppt und/oder reduziert wird, so dass der Flüssigkeitspegel innerhalb des Entgasungsbehälters durch die durch den Zulauf nachströmende Flüssigkeit ansteigt.

Durch den ansteigenden Flüssigkeitspegel innerhalb des Entgasungsbehälters steigt der Druck innerhalb des Entgasungsbehälters und das im Entgasungsbehälter befindliche Gas wird zumindest teilweise durch die Ablassöffnung gedrückt.

Erfindungsgemäß ist damit zum einen keine Unterdruckquelle mehr notwendig, um das Gas aus dem Entgasungsbehälter anzuziehen. Der Aufbau wird daher erheblich einfacher. Zudem haben die Erfinder erkannt, dass durch ein solches Vorgehen die Qualität der Entgasung ohne Unterdruckquelle gegenüber dem Stand der Technik erheblich gesteigert werden kann.

Gemäß einer Ausgestaltung der vorliegenden Erfindung umfasst die Hydrozyklon-Entgasungsvorrichtung eine Steuerung, welche den Flüssigkeitsstrom aus dem Entgasungsbehälter so ansteuert, dass in einer ersten Betriebsphase durch den Flüssigkeitsstrom aus dem Entgasungsbehälter der Flüssigkeitspegel gesenkt und ein Unterdruck im Entgasungsbehälter erzeugt wird, wobei sich entlang einer Rotationsachse ein äußerer Flüssigkeitszyklon und ein innerer Gaszyklon bilden, und in einer zweiten Betriebsphase der Flüssigkeitsstrom aus dem Entgasungsbehälter gestoppt und/oder reduziert wird, so dass der Flüssigkeitspegel innerhalb des Entgasungsbehälters durch die durch den Zulauf nachströmende Flüssigkeit ansteigt, wobei Gas aus der Ablassöffnung abgelassen wird. Durch diese beiden Betriebsphasen ergibt sich eine einfache Ansteuerung. Zudem lässt sich die Qualität der Entgasung erheblich steigern.

Gemäß einer Ausgestaltung der vorliegenden Erfindung ist die Steuerung so ausgestaltet, dass die Hydrozyklon-Entgasungsvorrichtung abwechselnd in der ersten und zweiten Betriebsphase betrieben wird.

Gemäß einer Ausgestaltung der vorliegenden Erfindung ist die Steuerung insbesondere so ausgestaltet, dass die Hydrozyklon-Entgasungsvorrichtung in einem kontinuierlichen Wechsel zwischen erster und zweiter Betriebsphase betrieben wird. Insbesondere wird die Hydrozyklon-Entgasungsvorrichtung hierbei ohne zwischengeschaltete inaktive Phasen betrieben. Aufgrund des einfachen Aufbaus und der einfachen Ansteuerung ist die erfindungsgemäße Hydrozyklon-Entgasungsvorrichtung für einen solchen Dauerbetrieb besonders gut geeignet.

Gemäß einer Ausgestaltung der vorliegenden Erfindung nimmt die Steuerung den Wechsel von der ersten in die zweite Betriebsphase, d.h. insbesondere das Stoppen und/oder Reduzieren des Flüssigkeitsstroms aus Entgasungsbehälter, zeitgesteuert vor. Insbesondere kann hierdurch auf Drucksensoren innerhalb des Entgasungsbehälters, welche beispielsweise bei Sprührohrentgasungsanlagen zur Ansteuerung zum Einsatz kommen, ggf. verzichtet werden. Für das im Rahmen der zweiten Betriebsphase erfolgende Ablassen des Gases aus dem Entgasungsbehälter kann, wie im folgenden noch beschrieben, in einer möglichen Ausgestaltung aber auch eine Drucksteuerung zum Einsatz kommen. Weiterhin kann das im Rahmen der zweiten Betriebsphase erfolgende Ablassen des Gases aus dem Entgasungsbehälter auch mechanisch gesteuert, beispielsweise durch das mechanische Einwirken des Flüssigkeitsstandes und/oder des Drucks auf ein Ventil, oder zeitgesteuert erfolgen.

Gemäß einer ersten Ausgestaltung der vorliegenden Erfindung wird eine Flüssigkeitspumpe, welche den Flüssigkeitsstrom aus dem Entgasungsbehälter erzeugt, in der ersten Betriebsphase immer mit dem gleichen Volumenstrom und/oder der gleichen Leistung betrieben wird. Insbesondere kann es sich bei der Flüssigkeitspumpe um eine Flüssigkeitspumpe handeln, welche ausschließlich die Aufgabe hat, den Flüssigkeitsstrom aus dem Entgasungsbehälter zu erzeugen und/oder welche in einer Leitung eines Nebenkreislaufs, in welchem der Entgasungsbehälter angeordnet ist, angeordnet ist.

Gemäß einer Ausgestaltung und insbesondere der soeben beschriebenen ersten Ausgestaltung der vorliegenden Erfindung schaltet die Steuerung in festen zeitlichen Abständen aus der ersten in die zweite Betriebsphase. Hierdurch wird eine besondere einfache Ansteuerung möglich, welche dennoch gute Entgasungsresultate bietet.

Gemäß einer zweiten Ausgestaltung der vorliegenden Erfindung wird eine Flüssigkeitspumpe, welche den Flüssigkeitsstrom aus dem Entgasungsbehälter erzeugt, in der ersten Betriebsphase mit einem variablen Volumenstrom und/oder einer variablen Leistung und/oder unabhängig vom Betrieb der Hydrozyklon-Entgasungsvorrichtung betrieben. Insbesondere kann es sich bei der Flüssigkeitspumpe hierbei um die Flüssigkeitspumpe eines Hauptkreislaufes handeln, an welchen ein Nebenkreislauf mit dem Entgasungsbehälter angeschlossen wird.

Gemäß einer Ausgestaltung und insbesondere der soeben beschriebenen zweiten Ausgestaltung der vorliegenden Erfindung hängen die zeitlichen Abstände, in welchem die Steuerung von der ersten in die zweite Betriebsphase schaltet, von einem Betriebswert der Flüssigkeitspumpe und/oder einem Wert des Flüssigkeitsstroms aus dem Entgasungsbehälter und insbesondere von einem Volumenstrom und/oder einer Leistung der Flüssigkeitspumpe ab. Hierdurch kann der Betrieb der Hydrozyklon-Entgasungsvorrichtung an einen variierenden Betrieb der Flüssigkeitspumpe und/oder einen variierenden Flüssigkeitsstroms aus dem Entgasungsbehälter angepasst werden.

Gemäß einer Ausgestaltung der vorliegenden Erfindung umfasst die Hydrozyklon-Entgasungsvorrichtung ein in einer Ablaufleitung angeordnetes Ventil, über welches der Flüssigkeitsstrom aus dem Entgasungsbehälter gesteuert wird. Dies ermöglicht eine besonders einfache Ansteuerung des Flüssigkeitsstroms aus dem Entgasungsbehälter. Das Ventil umfasst hierbei bevorzugt einen Aktor, insbesondere einen elektrischen Antrieb, welcher von der Steuerung angesteuert wird.

Insbesondere handelt es sich bei dem Ventil um ein Schaltventil, welches zwischen einem offenen Zustand und einem geschlossenen Zustand hin- und herschalten kann, insbesondere um zwischen der ersten und der zweiten Betriebsphase hin- und herzuschalten.

Gemäß einer Ausgestaltung der vorliegenden Erfindung erfolgt die Ansteuerung des Flüssigkeitsstrom aus dem Entgasungsbehälter und/oder die Ansteuerung zum Wechseln zwischen der ersten und der zweiten Betriebsphase ausschließlich durch das Ventil, während eine Flüssigkeitspumpe, welche den Flüssigkeitsstrom aus dem Entgasungsbehälter erzeugt, unabhängig von dem Betrieb der Hydrozyklon-Entgasungsvorrichtung und/oder unabhängig von dem Wechsel zwischen den Betriebsphasen betrieben wird. In einer möglichen Ausgestaltung der vorliegenden Erfindung wird hierbei die Flüssigkeitspumpe mit einer konstanten Leistung und/oder Drehzahl betrieben und/oder auch während der zweiten Betriebsphase weiter betrieben.

Gemäß einer Ausgestaltung der vorliegenden Erfindung umfasst die Hydrozyklon-Entgasungsvorrichtung eine Flüssigkeitspumpe, welche den Flüssigkeitsstrom aus dem Entgasungsbehälter erzeugt.

Gemäß einer Ausgestaltung der vorliegenden Erfindung steht die Flüssigkeitspumpe mit ihrer Saugseite mit dem Ablauf des Entgasungsbehälters in Verbindung. Die Flüssigkeitspumpe erzeugt hierdurch im Entgasungsbehälter einen Unterdruck.

Gemäß einer Ausgestaltung der vorliegenden Erfindung weist die Flüssigkeitspumpe eine Saughöhe von mindestens 1 m, weiter bevorzugt von mindestens 2 m, weiter bevorzugt von mindestens 5 m und weiter bevorzugt von mindestens 8 m oder 9 m auf. Die Saughöhe kann unter 20 m, weiter bevorzugt unter 15 m, liegen.

Gemäß einer Ausgestaltung der vorliegenden Erfindung, bei welcher ein Ventil zur Ansteuerung des Flüssigkeitsstroms vorgesehen ist, ist das Ventil bevorzugt auf der Druckseite der Flüssigkeitspumpe angeordnet. Hierdurch wird ein Trockenlaufen der Flüssigkeitspumpe verhindert. Diese Anordnung wird insbesondere dann gewählt, wenn die Flüssigkeitspumpe zusammen mit dem Entgasungsbehälter in einem Nebenkreislauf angeordnet ist.

Gemäß einer alternativen Ausgestaltung der vorliegenden Erfindung, bei welcher ein Ventil zur Ansteuerung des Flüssigkeitsstroms vorgesehen ist, ist das Ventil auf der Saugseite der Flüssigkeitspumpe angeordnet. Diese Anordnung wird insbesondere dann gewählt, wenn die Flüssigkeitspumpe in einem Hauptkreislauf und der Entgasungsbehälter in einem Nebenkreislauf angeordnet ist.

Gemäß einer Ausgestaltung der vorliegenden Erfindung ist an der Ablassöffnung mindestens ein Ventil vorgesehen, welches ein Ablassen des Gases erlaubt. Insbesondere erlaubt das mindestens ein Ventil je nach Schaltstellung einen Aufbau eines Unterdrucks im Entgasungsbehälter und ein Ablassen des Gases aus dem Entgasungsbehälter.

Gemäß einer Ausgestaltung der vorliegenden Erfindung wird das Gas durch einen Überdruck im Entgasungsbehälter und/oder ohne eine an die Ablassöffnung angeschlossene Unterdruckquelle in die Umgebung abgegeben.

Gemäß einer Ausgestaltung der vorliegenden Erfindung ist die Hydrozyklon-Entgasungsvorrichtung so ausgestaltet, dass das mindestens eine Ventil für die Erzeugung von Unterdruck im Entgasungsbehälter durch den Flüssigkeitsstrom und/oder zumindest während eines Teils der ersten Betriebsphase geschlossen ist und/oder zum Ablassen des Gases aus dem Entgasungsbehälter und/oder während zumindest eines Teils der zweiten Betriebsphase öffnet.

Gemäß einer Ausgestaltung der vorliegenden Erfindung handelt es sich bei dem Ventil um ein Schwimmerventil.

Gemäß einer ersten Ausgestaltung der vorliegenden Erfindung wird das mindestens eine Ventil nicht durch die Steuerung angesteuert.

Gemäß einer und insbesondere der ersten Ausgestaltung der vorliegenden Erfindung wird das mindestens eine Ventil mechanisch durch den Flüssigkeitspegel und/oder den Druck im Entgasungsbehälter angesteuert.

Gemäß einer und insbesondere der ersten Ausgestaltung der vorliegenden Erfindung umfasst das Ventil ein Schwimmerventil und/oder ein Rückschlagventil.

Gemäß einer alternativen Ausgestaltung der vorliegenden Erfindung wird das mindestens eine Ventil durch die Steuerung angesteuert. Die Ansteuerung kann zeitgesteuert und/oder druckgesteuert erfolgen.

Gemäß einer Ausgestaltung der vorliegenden Erfindung ist der Entgasungsbehälter so ausgestaltet, dass die Flüssigkeit tangential über den mindestens einen Zulauf in den Entgasungsbehälter einströmt.

Gemäß einer Ausgestaltung der vorliegenden Erfindung ist der Entgasungsbehälter so ausgestaltet, dass die Flüssigkeit axial über den mindestens einen Ablauf aus dem Entgasungsbehälter abgezogen wird.

Gemäß einer möglichen Ausgestaltung ist der mindestens eine Zulauf in einem Zulaufring vorgesehen, welcher sich an mindestens ein Mantelelement des Entgasungsbehälters axial anschließt.

Die Zulaufgeometrie kann hierdurch in einem separaten Element angeordnet werden, was den Aufbau des Entgasungsbehälters vereinfacht.

Gemäß einer möglichen Ausgestaltung ist der Zulaufring zwischen zwei Mantelelementen des Entgasungsbehälters angeordnet.

Gemäß einer möglichen Ausgestaltung umfasst der Zulaufring mehrere über den Umfang verteilte Zuläufe, welche bevorzugt tangential in eine Innenumfangsfläche des Zulaufrings münden.

Gemäß einer möglichen Ausgestaltung umfasst der Zulaufring eine Innenumfangsfläche, in welcher der oder die Zuläufe münden. Die Innenumfangsfläche des Zulaufrings bildet bevorzugt einen Teil der Innenumfangsfläche des Entgasungsbehälters.

Gemäß einer möglichen Ausgestaltung ist vorgesehen, dass die Innenumfangsfläche des Zulaufrings an die Innenumfangsfläche des mindestens einen Mantelelements anschließt und bevorzugt mit dieser fluchtet.

Gemäß einer möglichen Ausgestaltung ist der mindestens eine Zulauf in einem Bereich zwischen einer axialen Mitte des Entgasungsbehälters und einem axialen Ende, an welchem die Ablassöffnung vorgesehen ist, angeordnet.

Gemäß einer möglichen Ausgestaltung ist der mindestens eine Zulauf von einer axialen Position der Ablassöffnung axial in Richtung auf die Ablaufseite beabstandet angeordnet, insbesondere um mindestens 5 %, bevorzugt mindestens 10 % der axialen Erstreckung des Entgasungsbehälters.

Durch die beabstandete Anordnung wird verhindert, dass Flüssigkeit durch die Ablassöffnung tritt und/oder der Zyklon in dem Entgasungsbehälter beeinträchtigt wird.

Gemäß einer möglichen Ausgestaltung verringert sich der Querschnitt eines Zulaufkanals, welcher zum Zulauf in den Entgasungsbehälter führt, zumindest über einen Teilbereich seiner Erstreckung stetig. Der Zulaufkanal kann hierbei insbesondere konisch oder hyperbolisch ausgeführt sein.

Gemäß einer möglichen Ausgestaltung ist in einer Zulaufleitung zu dem mindestens einen Zulauf in den Entgasungsbehälter ein Primärverwirbelungselement vorgesehen.

Gemäß einer möglichen Ausgestaltung sind mindestens zwei Zuläufe in den Entgasungsbehälter vorgesehen. Diese können jeweils so ausgestaltet sein, wie dies für den mindestens einen Zulauf beschrieben ist.

Gemäß einer möglichen Ausgestaltung ist das Primärverwirbelungselement am Eingang eines Zulaufkanals, welcher zum Zulauf führt, angeordnet. Insbesondere kann das Primärverwirbelungselement die Flüssigkeit verwirbeln, bevor diese durch den Zulauf in den Entgasungsbehälter strömt. In einer möglichen Ausgestaltung kann dies erfolgen, indem das Primärverwirbelungselement die Flüssigkeit tangential in den Zulaufkanal einströmen lässt.

Gemäß einer möglichen Ausgestaltung umfasst das Primärverwirbelungselement mindestens ein Primärverwirbelungsgehäuse mit mindestens einem tangentialen Zulauf und/oder einem axialen Ablauf.

Gemäß einer möglichen Ausgestaltung sind mindestens zwei Zuläufe in das Primärverwirbelungsgehäuse vorgesehen. Diese können jeweils so ausgestaltet sein, wie dies für den mindestens einen Zulauf beschrieben ist.

Gemäß einer möglichen Ausgestaltung verringert sich der Querschnitt eines Zulaufkanals, welcher zum Zulauf in das Primärverwirbelungsgehäuse führt, zumindest über einen Teilbereich seiner Erstreckung stetig. Der Zulaufkanal kann hierbei insbesondere konisch oder hyperbolisch ausgeführt sein.

Gemäß einer möglichen Ausgestaltung schließt der Zulaufkanal, welcher zum Zulauf in den Entgasungsbehälter führt, axial an den axialen Ablauf des Primärverwirbelungsgehäuses an.

Gemäß einer möglichen Ausgestaltung umfasst der Entgasungsbehälter eine mit einer Mittelbohrung versehene obere Verschlussplatte, wobei bevorzugt die Mittelbohrung der oberen Verschlussplatte die Ablassöffnung bildet.

Gemäß einer möglichen Ausgestaltung umfasst der Entgasungsbehälter eine mit einer Mittelbohrung versehene untere Verschlussplatte, wobei bevorzugt die Mittelbohrung der unteren Verschlussplatte den Ablauf für die Flüssigkeit bildet.

Gemäß einer möglichen Ausgestaltung umfasst der Entgasungsbehälter einen rotationssymmetrischen Innenraum. Bevorzugt weist dieser entlang seiner axialen Erstreckung eine zumindest über Teilbereiche zylindrische, konische und/oder hyperbolische Form auf.

Gemäß einer möglichen Ausgestaltung weist der Entgasungsbehälter entlang seiner axialen Erstreckung eine zylindrische Grundform auf. Dies erlaubt eine besonders einfache Konstruktion.

Gemäß einer möglichen Ausgestaltung umfasst der Entgasungsbehälter mindestens ein kreiszylinderförmiges Mantelelement.

Bevorzugt umfasst der Entgasungsbehälter mindestens zwei kreiszylinderförmige Mantelelemente.

Bevorzugt schließen das oder die Mantelelement(e) an einen Zulaufring an, wie er oben beschrieben wurde.

Die vorliegende Erfindung umfasst weiterhin eine Pumpenbaugruppe mit einer Flüssigkeitspumpe und einer Hydrozyklon-Entgasungsvorrichtung, wie sie oben beschrieben wurde. Insbesondere handelt es sich um eine Pumpenbaugruppe für einen Heiz- und/oder Kühlkreislauf.

Gemäß einer möglichen Ausgestaltung ist die Flüssigkeitspumpe hierbei in einem Hauptkreislauf und der Entgasungsbehälter in einem Nebenkreislauf parallel zur Flüssigkeitspumpe angeordnet.

Die vorliegende Erfindung umfasst weiterhin einen Flüssigkeitskreislauf mit einer Hydrozyklon-Entgasungsvorrichtung , wie sie oben beschrieben wurde.

Insbesondere kann es sich bei dem Flüssigkeitskreislauf um einen Heiz- und/oder Kühlkreislauf handeln.

Gemäß einer möglichen Ausgestaltung ist der Entgasungsbehälter parallel zu einem Hauptkreislauf in einem Nebenkreislauf angeordnet. Hierdurch kann die Hydrozyklon-Entgasungsvorrichtung intermittierend betrieben werden, ohne dass dies den Betrieb des Hauptkreislaufs einschränken und/oder beeinflussen würde.

Gemäß einer ersten möglichen Ausgestaltung ist in dem Nebenkreislauf stromabwärts des Entgasungsbehälters eine Flüssigkeitspumpe angeordnet, wobei der Flüssigkeitsstrom aus dem Entgasungsbehälter durch Ansteuerung der Flüssigkeitspumpe und/oder durch Ansteuerung eines Ventils, welches im Nebenkreislauf stromabwärts des Entgasungsbehälters und bevorzugt stromabwärts der Flüssigkeitspumpe angeordnet ist, angesteuert wird.

Gemäß einer und insbesondere der ersten möglichen Ausgestaltung erfolgt der Betriebs der Hydrozyklon-Entgasungsvorrichtung unabhängig von einem Betrieb einer Hauptpumpe eines Hauptkreislaufs erfolgt.

Gemäß einer und insbesondere der ersten möglichen Ausgestaltung ist der Nebenkreislauf an einer Rücklaufleitung eines Hauptkreislaufs angeordnet.

Gemäß einer zweiten möglichen Ausgestaltung ist in dem Hauptkreislaufs parallel zum Nebenkreislauf eine Flüssigkeitspumpe angeordnet, welche im Nebenkreislauf den Flüssigkeitsstrom aus dem Entgasungsbehälter erzeugt.

Gemäß einer und insbesondere der zweiten möglichen Ausgestaltung wird der Flüssigkeitsstrom aus dem Entgasungsbehälter durch Ansteuerung durch Ansteuerung eines Ventils, welches im Nebenkreislauf stromabwärts des Entgasungsbehälters angeordnet ist, angesteuert.

Gemäß einer und insbesondere der zweiten möglichen Ausgestaltung erfolgt der Betrieb der Hydrozyklon-Entgasungsvorrichtung in Abhängigkeit von einem Betrieb der Flüssigkeitspumpe des Hauptkreislaufs erfolgt.

Die vorliegende Erfindung umfasst weiterhin ein Verfahren zum Betrieb einer Hydrozyklon-Entgasungsvorrichtung und/oder einer Pumpenbaugruppe und/oder eines Flüssigkeitskreislaufs, wie sie oben beschrieben wurden. Hierbei wird zum Ablassen von Gas aus dem Entgasungsbehälter der Flüssigkeitsstrom aus Entgasungsbehälter gestoppt und/oder reduziert, so dass der Flüssigkeitspegel innerhalb des Entgasungsbehälters durch die durch den Zulauf nachströmende Flüssigkeit ansteigt.

Gemäß einer möglichen Ausgestaltung wird der Flüssigkeitsstroms aus Entgasungsbehälter so angesteuert, dass in einer ersten Betriebsphase durch den Flüssigkeitsstrom aus dem Entgasungsbehälter der Flüssigkeitspegel gesenkt und ein Unterdruck im Entgasungsbehälter erzeugt wird, wobei sich entlang einer Rotationsachse ein äußerer Flüssigkeitszyklon und ein innerer Gaszyklon bilden, und in einer zweiten Betriebsphase der der Flüssigkeitsstrom aus Entgasungsbehälter unterbrochen und/oder reduziert wird, so dass der Flüssigkeitspegel innerhalb des Entgasungsbehälters durch die durch den Zulauf nachströmende Flüssigkeit ansteigt, wobei Gas aus der Ablassöffnung abgelassen wird.

Der Betrieb kann insbesondere so erfolgen, wie dies oben bereits beschrieben wurde.

Weiterhin kann eine Hdyrozyklon-Entgasungsvorrichtung zum Einsatz kommen, wie sie oben beschrieben wurden.

Gemäß einer möglichen Ausgestaltung ist innerhalb des Entgasungsbehälters kein rotierendes Element vorgesehen. Es rotieren daher nur die Flüssigkeit und das Gas, jedoch keine Bauteile der Hdyrozyklon-Entgasungsvorrichtung.

Gemäß einer möglichen Ausgestaltung sind keine beweglichen Teile innerhalb des Entgasungsbehälters vorgesehen.

Gemäß einer möglichen Ausgestaltung ist bei der der Hdyrozyklon-Entgasungsvorrichtung gemäß der vorliegenden Erfindung keine Membran vorgesehen. Die Trennung zwischen Flüssigkeit und Gas erfolgt vielmehr über den Zyklon.

Gemäß einer möglichen Ausgestaltung umfasst die Steuerung einen Mikrokontroller und einen nicht-flüchtigen Speicher mit einem Computerprogramm, welches, wenn es auf dem Mikrokontroller abläuft, die oben beschriebenen Funktionen der Steuerung zur Verfügung stellt und/oder den oben beschriebenen Betrieb der Hydrozyklon-Entgasungsvorrichtung vornimmt.

Gemäß einer möglichen Ausgestaltung erfolgt die Ansteuerung der Hydrozyklon-Entgasungsvorrichtung durch die Steuerung automatisch.

Die vorliegende Erfindung wird nun anhand von Ausführungsbeispielen und Zeichnungen näher beschrieben.

Dabei zeigen:
- Fig. 0A:: ein erstes Ausführungsbeispiel einer erfindungsgemäßen Hydrozyklon-Entgasungsvorrichtung, einer erfindungsgemäßen Pumpenbaugruppe sowie eines erfindungsgemäßen Flüssigkeitskreislaufs,
- Fig. 0B: ein zweites Ausführungsbeispiel einer erfindungsgemäßen Hydrozyklon-Entgasungsvorrichtung, einer erfindungsgemäßen Pumpenbaugruppe sowie eines erfindungsgemäßen Flüssigkeitskreislaufs,
- Fig. 1:: ein Ausführungsbeispiel eines Entgasungsbehälters, wie er in einer der erfindungsgemäßen Hydrozyklon-Entgasungsvorrichtungen zum Einsatz kommen kann, in einer perspektivischen Ansicht,
- Fig. 2:: das in Fig. 1 dargestellte Ausführungsbeispiel des Entgasungsbehälters in einer Schnittansicht,
- Fig. 3:: eine perspektivische Ansicht eines im Rahmen der Erfindung zum Einsatz kommenden Zulaufrings,
- Fig. 4:: eine Schnittansicht des in Fig. 3 dargestellten Zulaufrings,
- Fig. 5:: eine Draufsicht eines an einem erfindungsgemäßen Zulauf angeordneten Primärverwirbelungselementes,
- Fig. 6:: das in Fig. 5 gezeigte Ausführungsbeispiel eines Primärverwirbelungselementes in einer Schnittansicht.

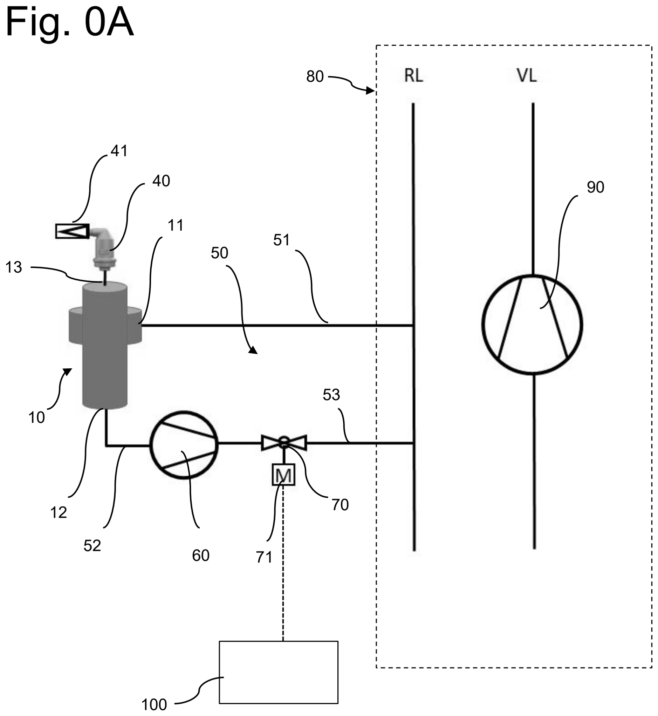

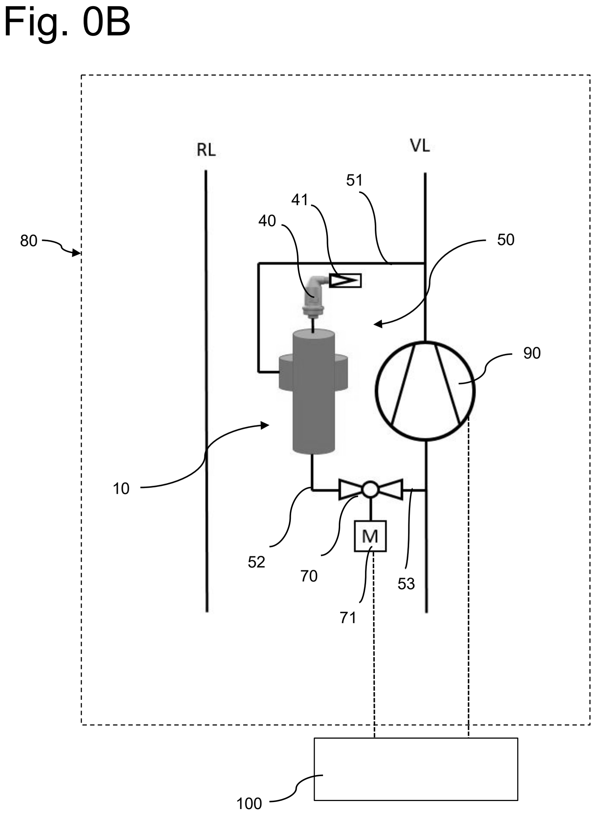

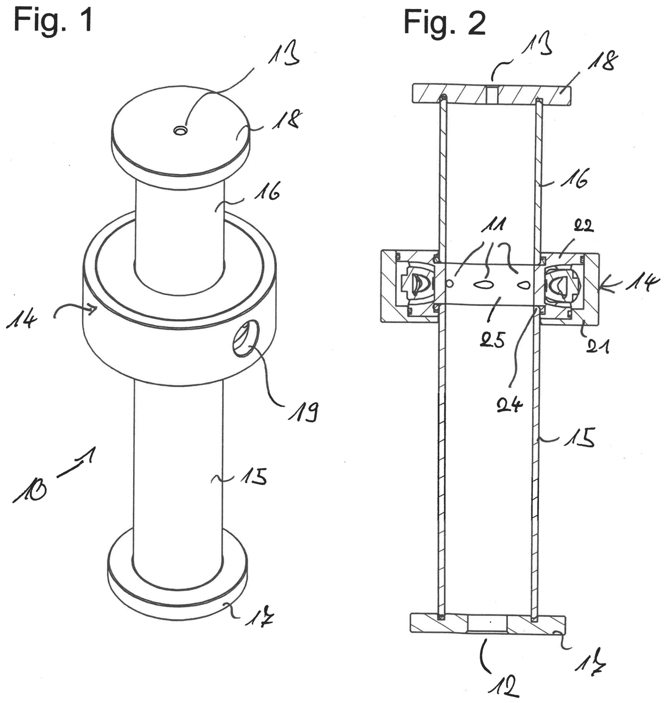

Fig. 0A und 0B zeigen ein erstes und ein zweites Ausführungsbeispiel einer erfindungsgemäßen Hydrozyklon-Entgasungsvorrichtung. Bevorzugt kommt im Rahmen dieser Hydrozyklon-Entgasungsvorrichtung ein Entgasungsbehälter zum Einsatz, wie er weiter unten in Bezug auf Fig. 1 - 6 beschrieben ist. Die in Fig. 0A und 0B dargestellten Hydrozyklon-Entgasungsvorrichtungen können jedoch auch mit jeder anderen Bauform von Entgasungsbehälter betrieben werden.

Fig. 0A und 0B zeigen gleichzeitig ein erstes und ein zweites Ausführungsbeispiel einer erfindungsgemäßen Pumpenbaugruppe sowie eines erfindungsgemäßen Flüssigkeitskreislaufs.

Bei beiden Ausführungsbeispielen der Hydrozyklon-Entgasungsvorrichtung ist ein Entgasungsbehälter 10 vorgesehen, im welchem sich im Betrieb entlang einer Rotationsachse ein äußerer Flüssigkeitszyklon und ein innerer Gaszyklon bilden, wobei der Entgasungsbehälter mindestens einen Zulauf 11 für die Flüssigkeit, mindestens einem Ablauf 12 für die Flüssigkeit und mindestens eine Ablassöffnung 13 für das Ablassen von Gas aufweist.

Der Flüssigkeitsstrom aus dem Entgasungsbehälter 10 wird durch eine Steuerung 100 angesteuert.

In beiden Ausführungsbeispielen ist hierfür ein Ventil 70 vorgesehen, welches über einen Aktor 71 betätigt wird, wobei der Aktor von der Steuerung angesteuert wird. Insbesondere handelt es sich bei dem Ventil 70 um ein elektrisch ansteuerbares Ventil, insbesondere bei dem Aktor 71 um einen Magnetaktor und/oder bei dem Ventil 70 um ein Magnetventil. Bei dem Ventil 70 handelt es sich bevorzugt um eine Schaltventil.

Alternativ könnte die Ansteuerung des Flüssigkeitsstroms aus dem Entgasungsbehälter 10 aber auch durch Ansteuerung einer Flüssigkeitspumpe erfolgen, durch welche der Flüssigkeitsstrom erzeugt wird, insbesondere durch Ansteuerung der in Fig. 0A vorgesehenen Flüssigkeitspumpe 60.

Die Entgasung erfolgt im Ausführungsbeispiel jeweils wie folgt: Beim Einschalten des Flüssigkeitsstroms sinkt der Flüssigkeitspegels innerhalb des Entgasungsbehälters unter das Niveau des Einlasses 11 und im Entgasungsbehälter 10 baut sich ein Vakuum auf. Die Flüssigkeit strömt dabei entlang der Rohrwandung des Entgasungsbehälters 10 in Richtung Auslass 12. Nach einer gewissen Zeit (z.B. 60sec) schaltet die Steuerung 100 und stoppt den Flüssigkeitsstrom aus dem Entgasungsbehälter. Flüssigkeit strömt weiterhin durch den Einlass in den Entgasungsbehälter 10, nämlich solange bis der Entgasungsbehälter 10 vollläuft und sich kurzzeitig ein Überdruck (relativ zum Umgebungsdruck) bildet. Dadurch können freigewordene Gase über die Ablassöffnung in die Umgebung entweichen. Hierfür ist an dieser eine entsprechende Ventilanordnung 40, 41 angeordnet. Nach einer gewissen Zeit (z.B. 15sec) schaltet die Steuerung 100 den Flüssigkeitsstrom aus dem Entgasungsbehälter wieder an und der Vorgang startet von Neuem. Mit dieser Methode können gelöste Gase bis auf wenige ppb eliminiert werden.

Im Ausführungsbeispiel ist an der Ablassöffnung eine Kombination aus einem Schwimmerventil 40 als Entlüfter und einem vakuumdichten Rückschlagventil 41 vorgesehen. Das Schwimmerventil wird hierbei durch den steigenden Flüssigkeitspegel im Entgasungsbehälter betätigt.

Alternativ wäre auch eine Kombination aus Schwimmerventil (Entlüfter) und einem elektrisch gesteuerten Ventil oder ein elektrisch gesteuertes Ventil denkbar. Das elektrisch gesteuerte Ventil kann durch die Steuerung zeitgesteuert und/oder druckgesteuert angesteuert werden. Beispielsweise kann das Ventil so angesteuert werden, dass es zu einem vorgegebenen Zeitpunkt nach dem Stoppen des Flüssigkeitsstroms aus dem Entgasungsbehälter öffnet und nach Ablauf einer vorgegebenen Zeitspanne wieder schließt. Ebenso kann das Ventil in Abhängigkeit von einem Druck im Entgasungsbehälter angesteuert werden und bspw. Öffnen, sobald der Druck im Entgasungsbehälter einen vorgegebenen Schwellwert überschreitet. Es kann daraufhin nach Ablauf einer vorgegebenen Zeitspanne und/oder beim Unterschreiten eines zweiten Schwellwerts wieder schließen.

In beiden in Fig. 0A und 0B gezeigten Ausführungsbeispielen eines Flüssigkeitskreislaufs umfasst dieser einen Hauptkreislauf 80 mit einer Flüssigkeitspumpe 90 und einen Nebenkreislauf 50, wobei der Entgasungsbehälter 10 im Nebenkreislauf angeordnet ist. Die Flüssigkeitspumpe 90 kann beispielsweise durch eine nicht dargestellte Steuerung bedarfsgesteuert angesteuert werden.

Bei dem Hauptkreislauf 80 kann es sich insbesondere um einen Heiz- und/oder Kühlkreislauf handeln.

Der Hauptkreislauf 80 weist im Ausführungsbeispiel eine Vorlaufleitung VL und eine Rücklaufleitung RL auf, wobei im Ausführungsbeispiel die Flüssigkeitspumpe 90 in der Vorlaufleitung VL angeordnet ist.

Der Nebenkreislauf 50 weist eine Zulaufleitung 51 zum Entgasungsbehälter 10 und eine Ablaufleitung 52, 53 vom Entgasungsbehälter 10 auf, welche jeweils von einer der Leitungen des Hauptkreislaufs abzweigen. Das Ventil 70 ist hierbei jeweils in der Ablaufleitung 52, 53 vorgesehen.

Bei dem in Fig. 0A dargestellten Ausführungsbeispiel umfasst die Hydrozyklon-Entgasungsvorrichtung eine eigene Flüssigkeitspumpe 60, durch welche der Flüssigkeitsstrom aus dem Entgasungsbehälter erzeugt wird. Diese ist in der Ablaufleitung 52, 53 vorgesehen, d.h. sie steht mit ihrer Saugseite mit dem Auslass 12 des Entgasungsbehälters 10 in Verbindung.

In dem in Fig. 0A dargestellten Ausführungsbeispiel ist das Ventil 70, welches zur Ansteuerung des Flüssigkeitsstroms aus dem Entgasungsbehälter dient, auf der Druckseite der Flüssigkeitspumpe 60 angeordnet und stoppt den Durchfluss bei laufender Pumpe.

Die Hydrozyklon-Entgasungsvorrichtung ist in Fig. 0A an der Rücklaufleitung RL des Hauptkreislaufs angeordnet. Sie könnte jedoch auch an der Vorlaufleitung VL angeordnet werden.

Bei dem in Fig. 0B dargestellten Ausführungsbeispiel umfasst die Hydrozyklon-Entgasungsvorrichtung dagegen keine eigene Flüssigkeitspumpe. Hier wird der Flüssigkeitsstrom aus dem Entgasungsbehälter vielmehr durch die Flüssigkeitspumpe 90 des Hauptkreises erzeugt. Hierfür mündet die Rücklaufleitung 53 auf der Saugseite der Flüssigkeitspumpe 90 in den Hauptkreis, während die Zulaufleitung 51 auf der Druckseite der Flüssigkeitspumpe von dem Hauptkreis abzweigt.

Bei dem in Fig. 0B dargestellten Ausführungsbeispiel ist die Hydrozyklon-Entgasungsvorrichtung dementsprechend an der Vorlaufleitung VL des Hauptkreises angeordnet.

Damit die Hydrozyklon-Entgasungsvorrichtung funktioniert, muss die zur Erzeugung des Flüssigkeitsstroms aus dem Entgasungsbehälter eingesetzte Pumpe saugseitig einen relevanten Unterdruck zur Verfügung stellen. Übliche Heizkreislaufpumpen beispielsweise wären hierfür nicht geeignet. Bei der in Fig. 0B dargestellten Ausgestaltung, bei welcher die Flüssigkeitspumpe 90 des Hauptkreislaufs zur Erzeugung des Flüssigkeitsstroms aus dem Entgasungsbehälter eingesetzt wird, muss diese daher mit einer entsprechenden Saugfähigkeit ausgestattet werden. Bei der in Fig. 0A gezeigten Ausgestaltung muss die Flüssigkeitspumpe 60 eine Saugfähigkeit aufweisen.

Beispielsweise kann eine Flüssigkeitspumpe 60/90 mit einer Saughöhe von über 1m, beispielsweise von 9m eingesetzt werden. Es wären jedoch auch Pumpen mit geringeren Saughöhen denkbar.

Anders als beispielsweise bei der Vakuum-Sprührohrentgasung erfolgt im Ausführungsbeispiel die Ansteuerung des Flüssigkeitsstroms nicht druck-gesteuert, sondern zeitgesteuert. Insbesondere kann hierbei das Ein- und Ausschalten des Flüssigkeitsstroms unabhängig vom Druck im Entgasungsbehälter erfolgen. Weiterhin unterscheidet sich auch der Druckverlauf im Entgasungsbehälter grundlegend von dem Druckverlauf bei der Vakuum-Sprührohrentgasung. Während nämlich der Druck im Sprührohr bei der Vakuum-Sprührohrentgasung einen im Wesentlichen sinusförmigen Verlauf aufweist, steigt im Ausführungsbeispiel der vorliegenden Erfindung beim Abschalten des Flüssigkeitsstroms der Unterdruck im Entgasungsbehälter schnell an und verbleibt auf diesem Wert, während der Flüssigkeitsstrom aufrecht erhalten wird. Erst beim Abschalten des Flüssigkeitsstroms sinkt der Unterdruck schnell ab. Der Entgasungsbehälter befindet sich während der ersten Betriebsphase mit eingeschaltetem Flüssigkeitsstrom daher auf einem in wesentlichen konstanten Unterdruck-Niveau.

Die Ansteuerung des Flüssigkeitsstroms erfolgt gemäß der vorliegenden Erfindung bevorzugt zeitgesteuert, beispielsweise in regelmäßigen Intervallen. Dementsprechend erfolgt die Entgasung auch im Wesentlichen quasi-kontinuierlich, das heißt in einer Taktung, bei welcher sich Betriebsphasen mit Flüssigkeitsstrom und Phasen, in welchen das Gas durch Abschalten des Flüssigkeitsstroms abgelassen wird, regelmäßig abwechseln.

Wird die Hydrozyklon-Entgasungsvorrichtung wie in Fig. 0A als separate Einheit mit einer eigenen Flüssigkeitspumpe 60 eingesetzt, wird die Flüssigkeitspumpe 60 bevorzugt mit einem konstanten Volumenstrom betrieben. Dementsprechend kann die Ansteuerung für das Ein- und Ausschalten des Flüssigkeitsstroms mit festen Schaltzeiten erfolgen.

Wird die Hydrozyklon-Entgasungsvorrichtung wie in Fig. 0B dagegen zusammen mit der Flüssigkeitspumpe 90 des Hauptkreislaufs, insbesondere eines Heizsystems, eingesetzt, liegt durch die von der Entgasung unabhängige Ansteuerung der Flüssigkeitspumpe 90 kein kontinuierlicher Flüssigkeitsstrom aus dem Entgasungsbehälter vor. Daher kann vorgesehen sein, die Schaltzeiten des Ventils 70, über welches die Entgasungsphasen gesteuert werden, von dem Betrieb der Flüssigkeitspumpe 90 abhängig machen.

Die erfindungsgemäße Hydrozyklon-Entgasungsvorrichtung kann insbesondere stationär in einem Flüssigkeitskreislauf, insbesondere einem Heiz- und/oder Kühlkreislauf verbaut werden.

Bei der in Fig. 0B gezeigten Ausgestaltung kann die Hydrozyklon-Entgasungsvorrichtung insbesondere in die Pumpenbaugruppe des Hauptkreislaufs integriert werden.

Mit der erfindungsgemäßen Lösung lassen sich im Vergleich zur Sprühentgasung, aber auch im Vergleich zu aus dem Stand der Technik bekannten Hydrozyklon-Entgasungsvorrichtungen erheblich bessere Entgasungswerte erreichen. Während übliche Sprühentgasungs-Anlagen lediglich auf Entgasungswerte von ca. 100-200 ppm kommen, erhält man durch die erfindungsgemäße Hydrozyklon-Entgasungsvorrichtung im Ausführungsbeispiel Werte von 10-20 ppm, und damit eine Entgasungsqualität, welche mit Membran- oder Vakuumentgasungsanlagen mithalten kann.

Fig. 1 und 2 zeigen nun ein Ausführungsbeispiel eines Entgasungsbehälters, wie er bei einer erfindungsgemäßen Hydrozyklon-Entgasungsvorrichtung zum Einsatz kommen kann.

Der Entgasungsbehälter 10 weist einen Innenraum auf, in welchen über einen oder mehrere Zuläufe 11 Flüssigkeit einströmt und in dem Innenraum des Entgasungsbehälters entlang einer Rotationsachse des Entgasungsbehälters einen äußeren Flüssigkeitszyklon und einen inneren Gaszyklon bildet. Weiterhin ist ein Ablauf 12 für die Flüssigkeit und eine Ablassöffnung 13 zum Ablassen von Gas vorgesehen. Der Ablauf 12 des Entgasungsbehälters steht, wie oben bereits beschrieben, in hydraulischer Verbindung mit der Saugseite der Flüssigkeitspumpe 60 bzw. 90.

Bei dem in Fig. 1 und 2 gezeigten Ausführungsbeispiel sind der eine oder die mehreren Zuläufe 11 in einem Zulaufring 14 angeordnet. Hierdurch kann die relativ komplexe Geometrie der Zuläufe in einem separaten Element, welches mit den übrigen Elementen des Entgasungsbehälters verbunden wird, bereitgestellt werden.

Der Zulaufring 14 weist einen Flüssigkeitseinlass 19 auf, an welchen die Zulaufleitung 51 für die zu entgasende Flüssigkeit angeschlossen ist. Von dem Flüssigkeitseinlass 19 strömt die zu entgasende Flüssigkeit innerhalb des Zulaufrings zu dem Zulauf 11 oder den mehreren Zuläufen, über welche die Flüssigkeit in den Innenraum des Entgasungsbehälters einströmt.

Der Zulaufring 14 weist eine ringförmige Innenumfangsfläche 25 auf, in welche die Zuläufe 11 münden, und welche einen Teil der Innenumfangsfläche des Entgasungsbehälters bildet.

Der Zulaufring 14 wird mit einem oder mehreren Mantelelementen 15, 16 des Entgasungsbehälters verbunden, welche die restliche Innenumfangsfläche des Entgasungsbehälters bereitstellen.

Im Ausführungsbeispiel ist der Zulaufring 14 zwischen einem unteren Mantelelement 15 und einem oberen Mantelelement 16 angeordnet. Die Innenumfangsflächen des oder der Mantelelemente fluchten bevorzugt mit der Innenumfangsfläche 25 des Zulaufrings 14.

Im Ausführungsbeispiel weist der Entgasungsbehälter einen kreiszylinderförmigen Innenraum auf. Die Erfinder der vorliegenden Erfindung haben erkannt, dass sich der eigentlich hyperbolisch geformte Flüssigkeitszyklon auch bei einer solchen Gehäuseform bildet, und daher auf aufwändigere Gehäuseformen verzichtet werden kann. Die Mantelelemente 15 und 16 können hierdurch durch hohlzylinderförmige Rohrelemente gebildet werden. Diese weisen ebenfalls einen kreisförmigen Querschnitt auf.

Der Entgasungsbehälter 10 ist oben und unten durch Verschlussplatten 17 und 18 verschlossen. Die obere Verschlussplatte 18 ist auf das obere Mantelelement 18 aufgesetzt und verschließt dieses nach oben, die untere Verschlussplatte 17 auf das untere Mantelelement 15 unten aufgesetzt und verschließt dieses nach unten.

Die obere Verschlussplatte 18 weist eine Mittenbohrung 13 auf, welche die Absaugöffnung für das Absaugen von Gas bildet. Die untere Verschlussplatte 17 weist ebenfalls eine Mittenbohrung 12 auf, welche als Ablauf für die Flüssigkeit dient.

Bei dem Ausführungsbeispiel des Entgasungsbehälters erfolgt der Ablauf der Flüssigkeit daher axial. Die Erfinder der vorliegenden Erfindung haben erkannt, dass der für einen tangentialen Ablauf notwendige Aufwand nicht notwendig ist und auch ein axialer Ablauf zu einer guten Entgasungsleistung führt.

Im Ausführungsbeispiel weist der Zulaufring 14 oberhalb und unterhalb der Innenumfangsfläche 25 eine stufenförmige Abkantung 24 auf, an welche die Mantelelemente 15 beziehungsweise 16 angesetzt werden. Die Abdichtung erfolgt über Dichtringe, welche am Außenumfang der Mantelelemente 15, 16 angreifen und in Nuten am Innenumfang der Stufe des Zulaufrings verlaufen.

Der Zulaufring weist ein Mantelteil 21 auf, an welchem der Flüssigkeitseinlass 19 angeordnet ist, und in welches axial ein flüssigkeitsführendes Ringelement 22 eingesetzt ist.

Zwischen dem Mantelteil 21 und dem flüssigkeitsführenden Ringelement 22 ist ein Ringraum gebildet, über welchen die Flüssigkeit von dem Flüssigkeitseinlass 19 zu den Zulaufbereichen fließt.

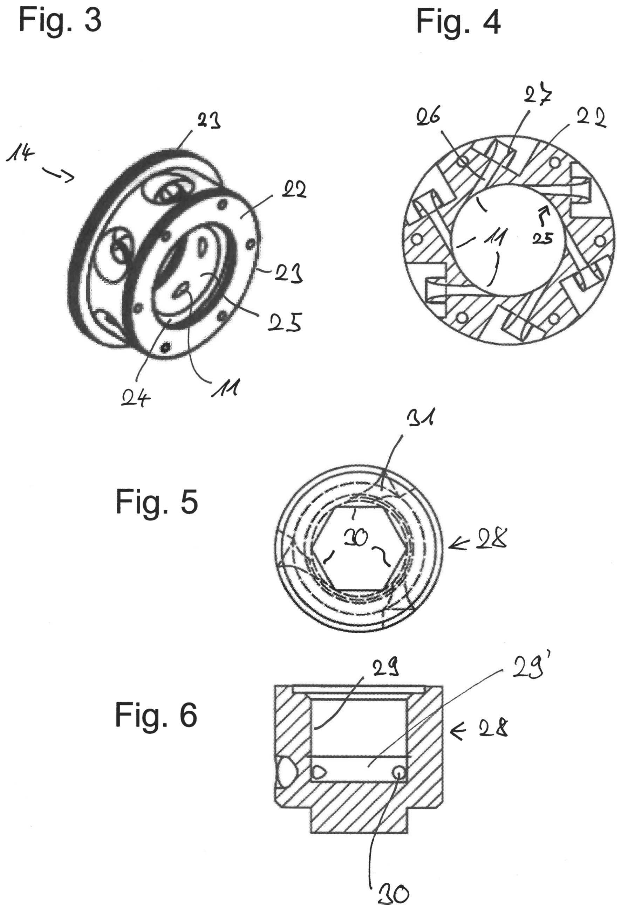

Figuren 3 und 4 zeigen ein Ausführungsbeispiel des flüssigkeitsführenden Ringelementes 22. Dieses ist über O-Ring-Dichtungen 23 dichtend in das Mantelteil 21 eingesetzt.

Das flüssigkeitsführende Ringelementes 22 dient als Drallerzeuger für die in den Entgasungsbehälter einströmende Flüssigkeit. Von dem Außenumfang des flüssigkeitsführenden Ringelementes führen jeweils Zulaufkanäle 26 zu den Zuläufen 11 in den Entgasungsbehälter. Die Zulaufkanäle 26 sind so angeordnet, dass die Flüssigkeit über die Zuläufe 11 tangential in Innenraum des Entgasungsbehälters einströmt. Insbesondere verläuft dabei eine Achse der Zulaufkanäle 26 tangential zur Oberfläche der Innenumfangsfläche 25 im Bereich des jeweiligen Zulaufes 11.

Die Zulaufkanäle 26 weisen jeweils einen sich verjüngenden Querschnitt auf und bilden damit Zulaufdüsen. Der Querschnitt kann sich hierbei insbesondere konisch oder hyperbolisch verjüngen.

Gemäß einer ersten Variante der vorliegenden Erfindung stehen die Zulaufkanäle 26 unmittelbar mit dem Ringraum, über welchen sie mit Flüssigkeit von dem Flüssigkeitsanschluss 19 versorgt werden, in Verbindung. Die Flüssigkeit fließt in diesem Fall bevorzugt weitgehend laminar durch die Zulaufkanäle zum jeweiligen Zulauf.

Gemäß einer zweiten Variante ist dagegen am Eingang der Zulaufkanäle 26 ein Primärverwirbelungselement 28 vorgesehen, über welches die Flüssigkeit verwirbelt in die Zulaufkanäle 26 einströmt. Durch die Primärverwirbelungselemente lässt sich die Entgasungsleistung noch einmal erhöhen.

Ein Ausführungsbeispiel eines solchen Primärverwirbelungselementes 28 ist in Fig. 5 und 6 gezeigt. Im Ausführungsbeispiel weist das Primärverwirbelungselement eine Kappenform auf, und wird mit seinem Innenumfang an einem Außenumfang des Eingangsbereichs 27 der Zulaufkanäle 26 angeordnet.

Das Primärverwirbelungselement 28 weist einen oder mehrere Primärzuläufe 30 auf, über welche Flüssigkeit tangential in das Primärverwirbelungselement einströmt. Die so rotierende Flüssigkeit strömt dann weiter in den Zugangskanal 26 und von dort zum jeweiligen Zugang 11 in den Entgasungsbehälter.

Hierfür weist das Primärverwirbelungselement 28 einen oder mehrere Primärzulaufkanäle 31 auf, welche durch einen Mantelbereich des Primärverwirbelungselements hindurch zu den Primärzuläufen 30 führen. Die Primärzulaufkanäle 31 weisen jeweils einen sich in Strömungsrichtung verjüngenden Querschnitt auf und bilden daher Düsen. Der Querschnitt kann sich hierbei insbesondere konisch oder hyperbolisch verjüngen.

Das Primärverwirbelungselement verschließt den Zugangskanal an seinem Eingang in axialer Richtung, und führt die Flüssigkeit tangential in diesen ein. Die Primärzugänge 30 sind hierfür in einem Bereich 29' der Innenumfangsfläche des Primärverwirbelungselementes angeordnet, welche nach der Anordnung an dem Eingangsbereich 27 des Zugangskanals 26 axial an den Eingang zum Zugangskanal angrenzt.

Ein Innenumfang 29 des Primärverwirbelungselementes ist am Außenumfang des Zugangsbereichs 27 angeordnet, beispielsweise ist das Primärverwirbelungselement auf den Eingangsbereich 27 aufgeschoben oder mit diesem verschraubt.

Im Ausführungsbeispiel sind die Eingangsbereiche 27 für die Zulaufkanäle 26 in einen Außenumfang des flüssigkeitsführenden Ringelementes eingelassen, insbesondere in dieses eingefräst.

Ebenso sind bevorzugt die Zugangskanäle 26 sowie die Primärzugangskanäle 31 in die jeweiligen Elemente eingefräst.

Im Ausführungsbeispiel sind die Zuläufe 11 in den Entgasungsbehälter axial von der Ablassöffnung 13 und/oder der oberen Verschlussplatte 18 beabstandet angeordnet. Insbesondere ist dabei das obere Mantelelement 16 zwischen dem Zulaufring 14 und der oberen Verschlussplatte 18 angeordnet. Hierdurch wird verhindert, dass Flüssigkeit über die Ablassöffnung 13 abgesaugt wird.

In alternativen Ausgestaltungen könnten die Zuläufe 11 beziehungsweise der Zulaufring 14 jedoch auch unmittelbar unterhalb der Ablassöffnung 13 und/oder der oberen Verschlussplatte 18 angeordnet sein.

Bevorzugt sind der oder die Zuläufe 11 beziehungsweise der Zukaufring 14 in einem Bereich zwischen der axialen Mitte des Entgasungsbehälters und der Entgasungsöffnung 13 und/oder oberen Verschlussplatte 18 angeordnet. Besonders bevorzugt sind der oder die Zuläufe 11 beziehungsweise der Zulaufring jedoch hiervon axial beabstandet, insbesondere um mindestens 5 % der axialen Erstreckung des Entgasungsbehälters, weiter bevorzugt um mindestens 10 %. Insbesondere kann der axiale Abstand mindestens 20 % der axialen Erstreckung des Entgasungsbehälters betragen.

Die axiale Höhe die Innenumfangsfläche 25 des Zulaufrings beträgt bevorzugt weniger als 20 % der axialen Erstreckung des Entgasungsbehälters, weiter bevorzugt weniger als 10 % der axialen Erstreckung.

Bevorzugt sind mehrere, insbesondere drei, Zuläufe 11 zum Entgasungsbehälter 10 und/oder mehrere, insbesondere drei, Primärzuläufe bzw. Primärzulaufkanäle 31 vorgesehen.

Der Entgasungsbehälter kann durch in den Figuren nicht dargestellte Spannelemente, beispielsweise in Form von Zahnstangen oder Spannbolzen, welche axial von der oberen Verschlussplatte 18 zur unteren Verschlussplatte 17 verlaufen, zu einer Einheit zusammengefügt werden. Die Zugelemente können durch entsprechende Öffnungen im Zulaufring 14 hindurchgehen. Alternativ können diese auch jeweils mit dem Zulaufring 14 verbunden sein.

Die oben beschriebenen einzelnen Komponenten des Entgasungsbehälters können jeweils auch unabhängig voneinander als Teil eines ansonsten anders gestalteten Entgasungsbehälters zum Einsatz kommen.

Insbesondere kann der Innenraum des Entgasungsbehälters konisch und/oder hyperbolisch geformt sein. Beispielsweise können hierfür anders ausgestaltete Mantelelemente 15 und/oder 16 eingesetzt werden.

## Patentansprüche

1. Hydrozyklon-Entgasungsvorrichtung zur Entgasung einer Flüssigkeit, mit einem Entgasungsbehälter, im welchem sich im Betrieb entlang einer Rotationsachse ein äußerer Flüssigkeitszyklon und ein innerer Gaszyklon bilden, wobei der Entgasungsbehälter mindestens einen Zulauf für die Flüssigkeit, mindestens einem Ablauf für die Flüssigkeit und mindestens eine Ablassöffnung für das Ablassen von Gas aufweist,
**dadurch gekennzeichnet,**
**dass** die Hydrozyklon-Entgasungsvorrichtung so ausgestaltet ist, dass zum Ablassen von Gas aus dem Entgasungsbehälter der Flüssigkeitsstrom aus Entgasungsbehälter gestoppt und/oder reduziert wird, so dass der Flüssigkeitspegel innerhalb des Entgasungsbehälters durch die durch den Zulauf nachströmende Flüssigkeit ansteigt.

2. Hydrozyklon-Entgasungsvorrichtung nach Anspruch 1, mit einer Steuerung, welche den Flüssigkeitsstroms aus Entgasungsbehälter so ansteuert, dass in einer ersten Betriebsphase durch den Flüssigkeitsstrom aus dem Entgasungsbehälter der Flüssigkeitspegel gesenkt und ein Unterdruck im Entgasungsbehälter erzeugt wird, wobei sich entlang einer Rotationsachse ein äußerer Flüssigkeitszyklon und ein innerer Gaszyklon bilden, und in einer zweiten Betriebsphase der Flüssigkeitsstrom aus Entgasungsbehälter gestoppt und/oder reduziert wird, so dass der Flüssigkeitspegel innerhalb des Entgasungsbehälters durch die durch den Zulauf nachströmende Flüssigkeit ansteigt, wobei Gas aus der Ablassöffnung abgelassen wird.

3. Hydrozyklon-Entgasungsvorrichtung nach Anspruch 2, wobei die Steuerung so ausgestaltet ist, dass die Hydrozyklon-Entgasungsvorrichtung abwechselnd in der ersten und zweiten Betriebsphase betrieben wird, wobei die Hydrozyklon-Entgasungsvorrichtung insbesondere in einem kontinuierlichen Wechsel zwischen erster und zweiter Betriebsphase betrieben wird.

4. Hydrozyklon-Entgasungsvorrichtung nach Anspruch 2 oder 3, wobei die Steuerung den Wechsel von der ersten in die zweite Betriebsphase und insbesondere das Stoppen und/oder Reduzieren des Flüssigkeitsstroms aus Entgasungsbehälter zeitgesteuert vornimmt, wobei bevorzugt das im Rahmen der zweiten Betriebsphase erfolgende Ablassen des Gases aus dem Entgasungsbehälter mechanisch, zeit- und/oder druckgesteuert erfolgt.

5. Hydrozyklon-Entgasungsvorrichtung nach Anspruch 4, wobei eine Flüssigkeitspumpe, welche den Flüssigkeitsstrom aus dem Entgasungsbehälter erzeugt, in der ersten Betriebsphase immer mit dem gleichen Volumenstrom und/oder der gleichen Leistung betrieben wird und/oder die Steuerung in festen zeitlichen Abständen aus der ersten in die zweite Betriebsphase schaltet,
oder
wobei eine Flüssigkeitspumpe, welche den Flüssigkeitsstrom aus dem Entgasungsbehälter erzeugt, in der ersten Betriebsphase mit einem variablen Volumenstrom und/oder einer variablen Leistung und/oder unabhängig vom Betrieb der Hydrozyklon-Entgasungsvorrichtung betrieben wird und/oder die zeitlichen Abstände, in welchem die Steuerung von der ersten in die zweite Betriebsphase schaltet, von einem Betriebswert der Flüssigkeitspumpe und/oder einem Wert des Flüssigkeitsstroms aus dem Entgasungsbehälter und insbesondere von einem Volumenstrom und/oder einer Leistung der Flüssigkeitspumpe abhängt.

6. Hydrozyklon-Entgasungsvorrichtung nach einem der vorangegangenen Ansprüche,
mit einem in einer Ablaufleitung angeordneten Ventil, über welches der Flüssigkeitsstrom aus dem Entgasungsbehälter gesteuert wird,
und/oder
mit einer Flüssigkeitspumpe, welche den Flüssigkeitsstrom aus dem Entgasungsbehälter erzeugt, und welche bevorzugt mit ihrer Saugseite mit dem Ablauf des Entgasungsbehälters in Verbindung steht, wobei die Flüssigkeitspumpe bevorzugt eine Saughöhe von mindestens 1 m, weiter bevorzugt von mindestens 2 m, weiter bevorzugt von mindestens 5 m, weiter bevorzugt von mindestens 9 m aufweist,
wobei das Ventil bevorzugt auf der Druckseite der Flüssigkeitspumpe angeordnet ist.

7. Hydrozyklon-Entgasungsvorrichtung nach einem der vorangegangenen Ansprüche, wobei an der Ablassöffnung mindestens ein Ventil vorgesehen ist, welches ein Ablassen des Gases erlaubt, wobei das Gas bevorzugt durch einen Überdruck im Entgasungsbehälter und/oder ohne eine an die Ablassöffnung angeschlossene Unterdruckquelle in die Umgebung abgegeben wird.

8. Hydrozyklon-Entgasungsvorrichtung nach Anspruch 7, wobei die Hydrozyklon-Entgasungsvorrichtung so ausgestaltet ist, dass das mindestens eine Ventil für die Erzeugung von Unterdruck im Entgasungsbehälter durch den Flüssigkeitsstroms und/oder zumindest während eines Teils der ersten Betriebsphase geschlossen ist und/oder zum Ablassen des Gases aus dem Entgasungsbehälter und/oder während zumindest eines Teils der zweiten Betriebsphase öffnet.

9. Hydrozyklon-Entgasungsvorrichtung nach Anspruch 7 oder 8, wobei das mindestens eine Ventil nicht durch die Steuerung angesteuert wird und insbesondere ein Schwimmerventil und/oder ein Rückschlagventil umfasst und/oder wobei das mindestens eine Ventil durch die Steuerung angesteuert wird.

10. Hydrozyklon-Entgasungsvorrichtung einem der vorangegangenen Ansprüche, wobei der Entgasungsbehälter so ausgestaltet ist, dass die Flüssigkeit tangential über den mindestens einen Zulauf in den Entgasungsbehälter einströmt und/oder wobei der Entgasungsbehälter so ausgestaltet ist, dass die Flüssigkeit axial über den mindestens einen Ablauf aus dem Entgasungsbehälter abgezogen wird,
und/oder
wobei der mindestens eine Zulauf in einem Zulaufring vorgesehen ist, welcher sich an mindestens ein Mantelelement des Entgasungsbehälters axial anschließt und bevorzugt zwischen zwei Mantelelementen des Entgasungsbehälters angeordnet ist, wobei der Zulaufring bevorzugt mehrere über den Umfang verteilte Zuläufe umfasst, welche bevorzugt tangential in eine Innenumfangsfläche des Zulaufrings münden, und/oder wobei der Zulaufring bevorzugt eine Innenumfangsfläche aufweist, welche an eine Innenumfangsfläche des mindestens einen Mantelelements anschließt und bevorzugt mit dieser fluchtet, und/oder
wobei der mindestens eine Zulauf in einem Bereich zwischen einer axialen Mitte des Entgasungsbehälters und einem axialen Ende, an welchem die Ablassöffnung vorgesehen ist, angeordnet ist, und/oder wobei der mindestens eine Zulauf von einer axialen Position der Ablassöffnung axial in Richtung auf die Ablaufseite beabstandet angeordnet ist, insbesondere um mindestens 5 %, bevorzugt 10 % der axialen Erstreckung des Entgasungsbehälters,
und/oder wobei in einer Zulaufleitung zu dem mindestens einen Zulauf in den Entgasungsgehälter ein Primärverwirbelungselement vorgesehen ist, wobei das Primärverwirbelungselement bevorzugt mindestens ein Primärverwirbelungsgehäuse mit mindestens einem tangentialen Zulauf und/oder einem axialen Ablauf umfasst.

11. Pumpenbaugruppe mit einer Flüssigkeitspumpe und einer Hydrozyklon-Entgasungsvorrichtung nach einem der vorangegangenen Ansprüche, wobei die Flüssigkeitspumpe bevorzugt in einem Hauptkreislauf und der Entgasungsbehälter in einem Nebenkreislauf parallel zur Flüssigkeitspumpe angeordnet ist.

12. Flüssigkeitskreislauf mit einer Hydrozyklon-Entgasungsvorrichtung nach einem der vorangegangenen Ansprüche, insbesondere Heiz- und/oder Kühlkreislauf, wobei der Entgasungsbehälter bevorzugt parallel zu einem Hauptkreislauf in einem Nebenkreislauf angeordnet ist.

13. Flüssigkeitskreislauf nach Anspruch 12, wobei in dem Nebenkreislauf stromabwärts des Entgasungsbehälters eine Flüssigkeitspumpe angeordnet ist, wobei der Flüssigkeitsstrom aus dem Entgasungsbehälter durch Ansteuerung der Flüssigkeitspumpe und/oder durch Ansteuerung eines Ventils, welches im Nebenkreislauf stromabwärts des Entgasungsbehälters und bevorzugt stromabwärts der Flüssigkeitspumpe angeordnet ist, angesteuert wird, wobei der Betriebs der Hydrozyklon-Entgasungsvorrichtung bevorzugt unabhängig von einem Betrieb einer Hauptpumpe eines Hauptkreislaufs erfolgt und/oder wobei der Nebenkreislauf an einer Rücklaufleitung eines Hauptkreislaufs angeordnet ist.

14. Flüssigkeitskreislauf nach Anspruch 12, wobei in dem Hauptkreislaufs parallel zum Nebenkreislauf eine Flüssigkeitspumpe angeordnet ist, welche im Nebenkreislauf den Flüssigkeitsstrom aus dem Entgasungsbehälter erzeugt, wobei der Flüssigkeitsstrom aus dem Entgasungsbehälter bevorzugt durch Ansteuerung durch Ansteuerung eines Ventils, welches im Nebenkreislauf stromabwärts des Entgasungsbehälters angeordnet ist, angesteuert wird, wobei der Betrieb der Hydrozyklon-Entgasungsvorrichtung bevorzugt in Abhängigkeit von einem Betrieb der Flüssigkeitspumpe des Hauptkreislaufs erfolgt.

15. Verfahren zum Betrieb einer Hydrozyklon-Entgasungsvorrichtung und/oder einer Pumpenbaugruppe und/oder eines Flüssigkeitskreislaufs nach einem der vorangegangenen Ansprüche, wobei zum Ablassen von Gas aus dem Entgasungsbehälter der Flüssigkeitsstrom aus Entgasungsbehälter unterbrochen und/oder reduziert wird, so dass der Flüssigkeitspegel innerhalb des Entgasungsbehälters durch die durch den Zulauf nachströmende Flüssigkeit ansteigt, wobei der Flüssigkeitsstroms aus Entgasungsbehälter bevorzugt so angesteuert wird, dass in einer ersten Betriebsphase durch den Flüssigkeitsstrom aus dem Entgasungsbehälter der Flüssigkeitspegel gesenkt und ein Unterdruck im Entgasungsbehälter erzeugt wird, wobei sich entlang einer Rotationsachse ein äußerer Flüssigkeitszyklon und ein innerer Gaszyklon bilden, und in einer zweiten Betriebsphase der der Flüssigkeitsstrom aus Entgasungsbehälter gestoppt und/oder reduziert wird, so dass der Flüssigkeitspegel innerhalb des Entgasungsbehälters durch die durch den Zulauf nachströmende Flüssigkeit ansteigt, wobei Gas aus der Ablassöffnung abgelassen wird.
